# EUROPEAN PATENT SPECIFICATION

(11) **EP 2 707 197 B1**
(45) Date of publication and mention of the grant of the patent: **18.07.2018**
(21) Application number: 12724757.5
(22) Date of filing: 10.05.2012
(51) Int. Cl.: B29C 63/42, B65B 53/06

(54) **APPARATUS AND METHOD FOR HEAT SHRINKING A FILM WRAPPING AN OBJECT**
VORRICHTUNG UND VERFAHREN ZUM WÄRMESCHRUMPFEN EINER EINEN GEGENSTAND UMWICKELNDEN FOLIE
APPAREIL DE THERMO-RÉTRACTION D'UN FILM ENVELOPPANT UN OBJET ET PROCÉDÉ DE FONCTIONNEMENT DE L'APPAREIL

(30) Priority: 10.05.2011 NL 2006752
(43) Date of publication of application: 19.03.2014
(73) Proprietor: Fuji Seal International, Inc., Osaka-shi, Osaka 532-0003 (JP)
(72) Inventor: KOOLHAAS, Ernst Christiaan, NL-5673 TT Nuenen (NL); VAN DER LINDEN, Martinus Hubertus Maria, NL-5466 NA Veghel (NL)
(74) Representative: Hylarides, Paul Jacques
(86) International application number: PCT/NL2012/050316
(87) International publication number: WO 2012/154047

(56) References cited:
- EP-A1- 2 103 527
- FR-A1- 2 588 828
- US-A- 4 579 614
- US-A- 5 031 298
- US-A1- 2009 188 605

## Description

The invention relates to an apparatus and method for heat shrinking a film wrapping an object.

Such an apparatus and method are known and disclosed in EP 2 103 527 A1 or US 2009/0188605.

US 3,744,146 discloses a method and apparatus of subsequent treatments of an object. Cooler air is provided as air curtain near the tunnels ends of a shrink tunnel.

US 5,031,298 discloses a open tunnel for heat shrinking sleeves around objects. A gaseous fluid, air, is used as heating medium. Nozzles having heater elements on opposite sides of a conveyor can be displaced towards or away from each other. A temperature sensor determines the temperature, establishes a difference with a predetermined/desired temperature and moves the heaters accordingly. To improve uniform shrinking of the sleeve a further gaseous flow is directed down, e.g. using a blower creating a continuous sheet of air onto the moving object to prior inflate each sleeve. The temperature of the gaseous flow is adjusted to correspond with the predetermined temperature. An additional blower member can be positioned downstream for final extra heating of the objects.

US 5,031,298 is not suitable for steam.

An object, such as a PET bottle is filled with beverages such as soft drinks and generally has a cylindrical shape. It is positioned onto and carried by a transporter such as a conveyor. The object will be moved through the heat treatment chamber.

A cylindrical label is often formed of a shrink film on which a brand name, information on the contents of the container and the like is printed. A label or film mounting system fits the envelope of film over the object.

The exact position of the film can differ from object to object. In order to allow shrinking the film, a current method and apparatus for heat shrinking employs multiple stages of heat shrinking. The speed of transport can be reduced to allow longer interaction.

It is a goal of the current invention to provide a method and apparatus allowing higher process speed or less stages of heat shrinking in a heat shrink oven. In general, a more efficient method and apparatus are to be provided.

According to a first aspect a heat shrink oven, being an apparatus for heat shrinking a film wrapping an object, is provided, the apparatus comprising a housing having a heat treatment chamber and a transport device for supporting and moving the object through the heat treatment chamber. The heat chamber is a closed housing that contains the heated fluid/steam.

In an embodiment at least one supply for steam is provided connected to at least two fluid outlet devices for the steam. A first fluid outlet device of the at least two fluid outlet devices is disposed in the heat treatment chamber along a first side of the transport device and the second fluid outlet device is disposed along a second side of the transport device, opposite the first side. The outlets of each fluid outlet device are directed towards the moving object, that is, to the object supported by the transport device moving through the treatment chamber.

In an embodiment the apparatus further comprises a system for generating a downwardly directed steam flow in an area of the moving object between the fluid outlet devices. The system is arranged in or received in the heat treatment chamber. The system provides an additional or secondary fluid flow subsidiary to the primary steam supplied from the outlets.

In an embodiment the system is arranged for generating the secondary downward steam flow having a temperature that is lower than the primary steam supplied from the outlets. The secondary system is arranged to use steam from the heat treatment chamber.

The secondary system has an internal steam as steam supply. As internal steam is used, the temperature of the steam is lowered with respect to the primary steam supplied from the nozzles. As US 5,031,298 lacks a heat treatment chamber, internal heated fluid is lacking too. Both US 3,744,146 and US 5,031,298 use auxiliary heated fluid from outside.

The transport device moves the object at a substantial speed into and through the heat treatment chamber, which results in turbulence in the fluid present in that chamber. The downward fluid flow can result in less turbulence of the fluid around the moving objects as the downward flow provides a more homogeneous flow of the fluid.

Further the generated secondary downward steam flow can carry the primary steam away after being applied to the object. The secondary fluid flow carries the primary fluid away in a downward direction. A result of this carrying away is that primary, heated, fluid will not contact upward parts of the moving object. The system in accordance with the invention will result in less deformation, at that location, of upward parts of the film wrapping the object.

Further the somewhat cooler (secondary) fluid flow in the downward direction could result in some local temperature control of the film. The secondary fluid flow preheats the film.

According to the invention the downwardly directed fluid flow of somewhat lower temperature is provided together with and as an additional flow to the supply of steam that will shrink the film.

Further the auxiliary downward flow of fluid, even though somewhat cooler, could result in heating or preheating the surface of the object somewhat more as a result of increased heat capacity due to the increased flow. This preheating of the surface will allow better adherence of subsequently heat shrunk film.

The steam can be part of a fluid, preferably steam that can be a mixture of air, steam or other heated gasses.

In an embodiment the temperature of the secondary fluid flow is at least 4, preferably 12, degrees Celsius lower than the steam flow entering the heat treatment chamber through the outlets. In an embodiment the temperature of the secondary fluid flow is less than 88 degrees Celsius, preferably less than 85 degrees Celsius and more preferably less than 82 degrees Celsius. Heat shrink ratios of well known films at these temperatures are low, resulting in a primary shrink only as a result of applied (primary) heat, making the process more controllable.

As the heat shrinking of film is very sensitive to the temperature of the fluid, providing a cooler fluid flow of some degrees Celsius, e.g. 4 or more, or 6 or more degrees Celsius, will lead to less, or preferably no, heat shrinking of the upward parts. Heated (primary) fluid is provided via the outlets of the fluid outlet devices and contacts the objects more or less directly after entering the chamber. The secondary fluid, fluid present in the chamber, can used for keeping the film at a temperature under the shrinking temperature.

In an embodiment a cooling system is available providing cooler fluid/air, preferably near the windows, as a further aid in cooling the secondary fluid flow.

In an embodiment the system for generating the downwardly directed fluid flow is free of auxiliary heating devices. Steam is provided to the chamber only via the fluid outlet device(s). Application of the supplied steam to the film wrapping the object will provide a first temperature reduction of the fluid.

The apparatus will have a tunnel-shaped area extending through the apparatus allowing passage of the object with film through the heat treatment chamber. The tunnel-shaped area is limited at an underside by the transport device supporting the object. The fluid outlet devices are directed towards the tunnel-shaped area, and could be positioned (partially) in the tunnel-shaped area. The tunnel-shaped area extends between the opposite disposed fluid outlet devices.

In an embodiment the heated (primary) fluid flow is supplied in a sideward direction, generally perpendicular to the secondary flow. In an embodiment steam is supplied to the heat treatment chamber in a horizontal direction. To this end the outlets of the fluid outlet device are directed generally horizontal direction. The horizontal direction results in shrinking of a circumferential part of the film, generally cylindrically, around a cylindrical object.

In an embodiment the outlets are directed at a bottom end of the moving object supported by the transport device. The bottom end of the object is carried by the transport device. This will result in heat shrinking the bottom end of the film wrapping the object. If the bottom end is heat shrunk, a generally downward flow of fluid will result in inflating the cylindrical film, resulting in better or more predictable position of the film, allowing more efficient subsequent heat shrinking.

In an embodiment the secondary steam system for generating the downward steam flow is part of a system arranged in the heat treatment chamber for arranging a flow pattern for steam in the heat treatment chamber comprising the generally downward flow between the steam outlet devices. The secondary steam system is an heat chamber internal system.

In an embodiment the system for generating the downwardly directed fluid flow is also arranged to generate a generally upwardly directed fluid flow in the heat treatment chamber in an area outside (not between) the fluid outlet devices. The upward and downward fluid flows can be part of a pattern of flows in the heat treatment chamber. The pattern will allow maintaining the flow of secondary fluid continuously. The path of the steam from steam outlets through the heat treatment chamber will lower the temperature of the steam before the steam is (again) supplied as secondary steam onto the objects.

In an embodiment the downward directed flow between the fluid outlet devices is guided outwards and upwards through an area not between/outside the opposed positioned first and second fluid outlet devices. In particular the downward flow between the fluid outlet devices is guided outwardly and afterward upwardly, surrounding or encircling the fluid outlet device.

During its flow the fluid will cool and upon reaching the area directly above the moving object and subsequently flowing downward, it will have a lower temperature than the steam from the outlets.

In an embodiment the system for generating the downwardly directed fluid flow comprises a partition, preferably arranged as a guide allowing the outward guiding of the fluid flow. The partition will allow the outward flow of fluid in the treatment chamber. The partition or guide is preferably positioned under the transport device.

In an embodiment the apparatus comprises a frame received in the heat treatment chamber for mounting the fluid outlet devices and the system for generating the downwardly directed fluid flow surrounds the fluid outlet devices mounted to the frame.

In an embodiment the system for generating the downwardly directed fluid flow further comprises, received in the heat treatment chamber, a fluid flow device, such as a vent, positioned vertically above the transport device and directed to allow downward fluid flow in the direction of the moving objects.

In an embodiment the apparatus comprises a human interface allowing inputting a configuration of e.g. the fluid flow speed of the fluid flow device/vent. This will allow control by the operator of the downward flow and thereby of the advantageous effects according to the invention.

In an embodiment the apparatus comprises multiple sets of fluid outlet devices provided along the transport device and wherein the system for generating the downwardly directed fluid flow generates the downward flow (at least) between the fluid outlet devices disposed most upstream.

In an embodiment the system for generating the downwardly directed fluid flow further comprises an outlet connected to the heat treatment chamber. This will allow to discharge some fluid from the chamber. In an embodiment the outlet is provided in the area not between the fluid outlet devices.

In an embodiment the downward flow is provided in along the transport device over a length of at least the length of one fluid outlet device. During the complete passage of the object along the fluid outlet device it is subjected to the beneficial downward fluid flow as provided according to the invention.

In an embodiment the fluid outlet device comprises at least three or more outlets generally positioned in a straight line along the transport device.

In an embodiment the outlet comprises a nozzle, a nozzle end thereof positioned less than 8 cm sideways from the moving objects. The operator is able to adapt the distance from nozzle end to object. In an embodiment the nozzles are positioned above the transport device.

In an embodiment fluid outlet devices disposed more downstream the tunnel, are positioned at a vertically more remote position from the transport device than the upstream fluid outlet devices. This will allow to first (upstream) heat shrink the film near a bottom end of the object and later (downstream) the upper part of the film.

In an embodiment the fluid outlet device comprises a manifold arranged to distribute the supplied steam from the supply line to the outlets. This will allow an evenly distributed steam onto the film wrapping the objects.

In an embodiment the transport device is at least partially received in the heat treatment chamber. In an embodiment the object is a generally cylindrical container for a beverage. In an embodiment the film is a cylindrical envelope.

According to a further aspect of the invention a method is provided for shrinking a heat shrinkable film wrapping an object. The method comprises in a heat treatment chamber of a heat shrink oven transporting the upright standing object wrapped with heat shrinkable film through a heat treatment chamber and applying steam onto a side of the film. This method is known in the art. It is a goal to improve the method so as to allow more efficient heat shrinking of the film.

In an embodiment the method further comprises directing fluid of lower temperature than the steam in a downward direction onto the object during application of the steam. This will allow to locally, near the upward part of the object, cool the heat shrink film, preventing (early) shrinking thereof. Further a homogeneous flow of fluid is provided over the object. The downward flow will carry steam downwardly, reducing turbulence in the upward area.

In an embodiment the steam is applied from two opposite sides onto the object carried through the heat treatment chamber.

In an embodiment the downward secondary fluid flow is generate between fluid outlet devices positioned opposite one another along the transport device for carrying the object and films.

In an embodiment applying the steam for heat shrinking a first part of the film comprises applying the steam to a bottom part of the object. According to this embodiment the downward flow can blow up the envelope wrapping the film after first heat shrinking a bottom end thereof. This results in better and more stable positioning of the film and allows quicker heat shrinking of the complete film in subsequent (downstream) heat shrinking steps.

In an embodiment of the method directing the fluid in the downward direction comprises generating a circular fluid flow in the heat treatment chamber, in the downward direction onto the object, in an outwards direction, away from the object, followed by an upward direction and inward direction. This circular fluid flow, encircles the outlets for applying the steam to the objects/film. During circulation, within the heat treatment chamber, the temperature of the fluid can be reduced with 4 or more degrees Celsius, which will allow obtaining the beneficial effects according to the invention

In an embodiment the method comprises disposing fluid from the heat treatment chamber. In an embodiment the fluid is disposed from the circular flow in a direction aligned with that flow. The discharge will not cause extra turbulence.

In an embodiment directing the fluid in the downward direction comprises venting the fluid. Venting can be controlled or configured allowing configuring the beneficial effects of the invention.

In an embodiment the method comprises multiple stages of applying steam to the object being transported through the heat treatment chamber. A further (downstream) stage can follow the stage comprising the application of steam in combination with the downwardly directed fluid of lower temperature. In a further downstream step a high power heat shrink step is possible as the position of the envelope film is improved according to the invention, allowing faster heat shrinking.

The invention will now be described referring to the drawing wherein:
Figure 1 shows a first view of an apparatus according to the invention;
Figure 2 shows a cross sectional view of the apparatus according to figure 1;
Figure 3 shows a cross sectional view along A-A in figure 2;
Figure 4 shows a further cross section of the apparatus according to the invention, and
Figure 5 shows a cross section along C-C in figure 4.

For better understanding of the invention, similar parts will have the same reference numbers in the following description of the figures.

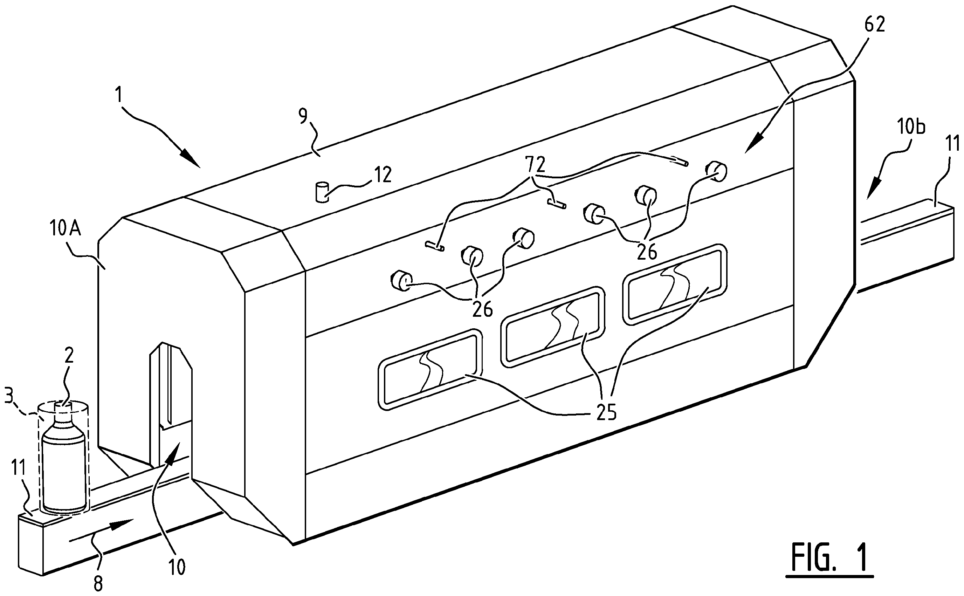

Apparatus 1, as schematically illustrated in figure 1, is an apparatus for heat shrinking a heat shrink film 3 wrapping an object 2.

The heat shrinking film 3 is made from shrinkable material that will shrink at a certain minimum temperature that can be reached by applying steam such as steam. Shrinking of the film will result in closely wrapping the shape of the object formed by a bottle or package. Reference is made to EP 2 103 527 A1 by the same applicant, included by reference.

A heat shrink oven 1, being an apparatus for heat shrinking, is known as such from prior art and has a housing 9. The illustrated housing is of generally rectangular shape. Top sides along the length of the housing are bevelled.

The housing 9 has heat treatment chamber 64. Inside the heat treatment chamber a tunnel-shaped space 10 is formed, having an entry side 10A and an exit side 10B. The apparatus comprises transport device 11. The transport device 11 extends through the heat treatment chamber 64. The transport device can carry an object 2 with film 3 through the tunnel-shaped space 10.

The housing 9 is provided with windows 25 allowing the operator to look inside the heat treatment chamber inside the housing 9. Several windows 25 allow the operator to watch several steps (upstream near 10a or downstream near 10b) of the process.

On the outside of housing 9 a human interface 62 from a configuration device and is provided to allow the operator to control the heat treatment process in the heat treatment chamber. Specifically the operator is able to adjust or reconfigure parameters of the supplied steam.

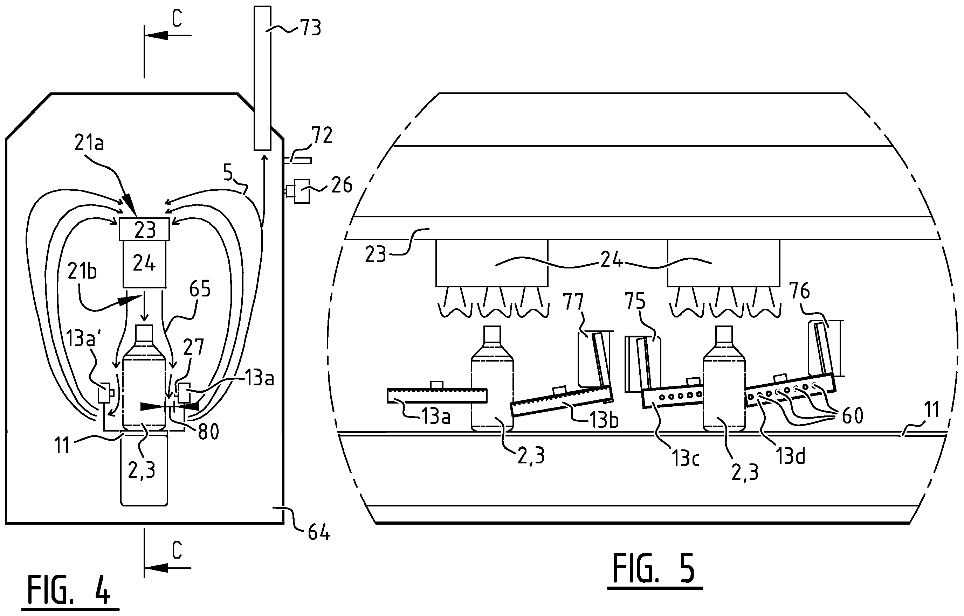

In this embodiment the human interface 62 comprises multiple knobs 26. Each knob 26 can be used to control one or more parameters of the heat shrinking process. The interface 62 can also comprise shafts 72 connected to a control valve for controlling the supply of steam. In an embodiment the pressure of the steam is controlled allowing control of the temperature. As will be discussed hereunder the configuration device can also adapt the distance 80, see Figure 4.

In order to shrink the film 3 wrapping the object 2 using heat, the apparatus comprises a supply 12 for heated fluid. The heated fluid can be steam. In this embodiment the steam is supplied from an external source. In another embodiment the steam is heated in the apparatus.

The supply will allow the steam to be supplied to the heat treatment area 64 and in particular to the tunnel shaped area 10 receiving the object. The supply 12 can comprise a system of tubes for transporting the steam, for clarity sakes not visible in the figures.

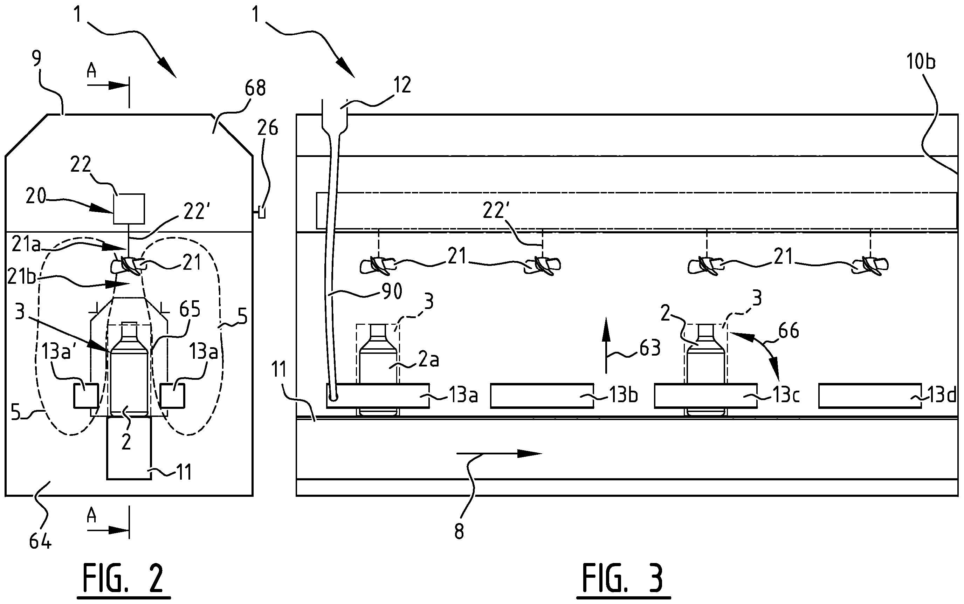

Multiple fluid outlet devices 13a-13a'; ....; 13d-13d' are connected to supply 12 (in figure 3 only one connection 90 is shown) and disposed on either sides along transport device 11. Fluid outlet device 13A is disposed on the right-hand of the transport device 11. The fluid outlet device 13A' is positioned on the left-hand side. The tunnel-shaped area 10, shown in figure 2 with dotted lines, is positioned partially in between the fluid outlet devices 13A-13A'.

In the embodiment shown, every fluid outlet device 13a-13a'; ...; 13d-13d' comprises multiple outlets 27, 60 arranged in line. Outlets 27, shown in figure 4, are arranged for releasing the steam. This fluid is at such operational temperature and has heat to shrink film when the fluid comes into contact with film.

The outlets 27 are directed at objects supported and conveyed by the transport device 11 through the tunnel-shaped area 10.

A detailed view of fluid outlet devices 13a-13a' and outlet 60 is shown in figure 4 and 5. The outlets 60 are disposed on the body 61. The outlets 27, 60 with body 61 form the fluid outlet device 13a-13a';..;13d-13d'. The outlets 27 are connected to supply 12 for steam. The fluid outlet devices 13a-13a' etc. comprise a manifold for distributing the supplied steam to the different outlets 27, 60.

Figure 3 shows the fluid outlet devices 13a-13a'; ...; 13d-13d' disposed on either side of the transport device 11 with the outlets 27 directed at the tunnel-shaped area 10 or the area through which the object 2 with film 3 are transported when carried by the transport device 11.

Several fluid outlet devices 13a-13d are disposed along the length 8 of the transport device 11 at different locations. An object 2 supported and carried by the transport device 11 will pass along the subsequent fluid outlet devices 13a-13d' when moved in the transport direction 8.

An object 2 wrapped with film 3 is transported from the inlet side 10a to the outlet side 10b and fluid outlet device 13a is positioned more upstream than fluid outlet device 13d.

The fluid outlet devices 13a-13d' can be positioned at different heights (indicated by arrow 63) or angles (indicated by arrow 66) along the transport device 11 in order to, when an object 2 and films 3 wrapping the object are transported in the transport direction, supply the steam onto the objects 2/films 3 moving through the tunnel-shaped area 10 at different locations.

The different positions of the fluid outlet devices allow obtaining a shrinking effect of the complete film 3 around object 2 with certain control in order for the film to closely wrap the shape of the object 2. The positioning and configuration of the fluid outlet devices along the transport device 11 allows control of circumstances of shrinking. Good control reduces failure in wrapping the object and will improve efficiency of the apparatus as a whole. Further the size of the nozzle of the outlets can be varied.

In order to control the circumstances of shrinking in the tunnel-shaped area 10 even more, in accordance with the invention, the heat treatment chamber 64 comprises a system for generating a downward directed fluid flow 65 in the tunnel-shaped area, between to two fluid outlet devices 13a-13a' disposed opposite on another along the transport device 11.

The primary steam flow from the outlets 27 is directed at the moving objects 3 and the steam will perform its shrinking function by subsequently losing some of its heat. The system according to the invention will subsequently direct the "used" steam away from the object and away from the transport device. The system will direct secondary steam away in a downward direction.

The system in accordance to the invention provides an additional flow pattern 5 on top of the steam released from the fluid outlet device 13a-13d'. The system in accordance to this embodiment will allow a circulation of secondary steam in a pattern indicated with arrow 5 in figure 2.

The flow pattern for steam inside the heat treatment chamber 64 generated by the system of the invention generally extends in a cross sectional plane of the machine, perpendicular to the transport device 11.

The circulation pattern 5 comprises a generally downwardly directed fluid flow part 65 in the area of the tunnel-shaped area 10, between the oppositely positioned fluid outlet devices 13a, 13a', continuing until substantially the height of the transport device, thereafter bending in an outward direction towards the sides of the heat treatment chamber 64, to subsequently curl upwards along the side 66 of the heat treatment chamber 64 and guided inward near a top of the heat treatment chamber 64.

In an embodiment, shown in figure 2 and 3, a fluid flow device 20, comprising one or more vents 21, is arranged vertically above the transport device 11. In the shown embodiments multiple vents 21 are disposed along the length of the transport device 11.

Every vent 21 is mounted to a propelling shaft 22' connected to the driving unit 22. Driving unit 22 can be an electromotor.

In an embodiment the power unit 22 is physically positioned in a chamber 68 separated from heat treatment chamber 64. Chamber 68 will contain less or no steam reducing the chance of malfunction of the electrical part.

For configuring the supply of steam 5 shafts 72 can be used connected to control valves positioned in the supply.

Figures 2 and 4 shows vents 21 of system 20 having an intake side 21a for taking in secondary steam 5 present in the heat treatment chamber, as well an outflow side 21b for returning to the heat treatment chamber the secondary steam 5.

The secondary fluid flow from the fan is directed downwardly towards the transport device and provides a generally homogeneous flow in the tunnel-shaped area through which the objects 2 with wrapping film 3 pass.

The system for generating a downward flow results in a more homogeneous temperature in the tunnel-shaped area 10, resulting in a more even heating of the film 3 during transport of the object along the different fluid outlet devices 13a-13a'; ...; 13d-13d'. Shrinking the film 3 will be improved as a result of the more efficient heat distribution and the shrinking process will be more controlled.

The system for generating the downward flow results in higher efficiency of the machine especially in the area surrounding the most upstream fluid outlet device 13a, 13a'. If the first shrinking step is performed successfully, further shrinking steps by fluid outlet devices 13b - 13d can follow along the transport device and can be performed more rapid.

The system for generating downward fluid flow results in an apparatus using the fluid in the heat treatment chamber in a more efficient fashion and in general the use of the fluid in this apparatus can be reduced. The reduction results in a higher energy efficiency.

By better controlling the circumstances of the shrink process in the tunnel-shaped area, the film 3 but also the object 2 will have a higher temperature which will result in a better shrinking. By adding the additional downward flow more heat conductance is initiated. Again, the higher control of shrinking will result in shortening the length of the heat shrink oven resulting in a smaller apparatus.

The fluid flow device 20 can allow adjustment of the speed of the downward flow using a human interface.

Further, in combination with configuration means for configuring the supply and/or the pressure of the steam to the heat treatment chamber will allow control of shrinking the film wrapping the object 2 passing through the tunnel-shaped area 10 over the transport devices 11.

As a further result of the system for generating the downward flow the fluid outlet devices can comprise more outlets 27,60 and can be positioned at a shorter distance from the object to the tunnel-shaped area. In an embodiment fluid outlet devices are disposed in the apparatus along the transport device having about 40-90 outlets per meter.

Figure 4 shows an exhaust 73 allowing the release of fluid present in the heat treatment chamber 64. Exhaust 73 is arranged in the area outside the fluid outlet devices 13a-13a'. In this area the flow pattern has an upward direction. The outlet/exhaust is positioned to allow the pattern to flow into the outlet, not disturbing the fluid pattern.

The transport device 11 supports the object 2 and will as such form a wall for the downward directed flow. It will also function as a partition between fluid directed to the left hand side and fluid directed to the right hand side. In an embodiment the partition can be further embodied encompassing guides for the outward directing of fluid.

Fluid flow device 24 has an outlet side 21b. in this embodiment the inlet side 21a is positioned on the side of the fluid flow device.

Figure 5 shows the fluid outlet devices 13a positioned at different heights and at different angles. Figure 5 also shows parts 75, 76, 77 of the frame allowing the positioning of the fluid outlet devices 13a.

The frame, not shown, allows the circulation pattern 5 around the fluid outlet devices 13a-13d.

During circulation, but already due to the fact that the steam is directed at the film, the temperature of the fluid is lower than the steam released from the outlets 27. During circulation no heat is added and therefore the temperature of fluid will be reduced further.

As it reaches the inlet side 21a of the vents 22,24 the fluid will have a significant lower temperature than the fluid supplied to the heat treatment chamber, e.g. at least 2 degrees, but preferably 5, 12 or more degrees less. In an embodiment the fluid temperature is lower than 90 degrees when it is directed downward by the vents 22,24 and forms the downward directed flow between the fluid outlet devices 13a-13d.

Fluid flow devices 24 are connected to a carrier 23 part of the frame of the housing 9.

The distance 80 between the outlets 27 of fluid outlet devices 27 can be varied. In the system of the invention the distance 80 is preferably less than 8 cm.

Many different embodiments of the transport device are possible within the scope of the invention.

The system for providing the downward directed flow between the fluid outlet devices can be positioned partially inside and partially outside the heat treatment chamber.

## Claims

1. Heat shrink oven (1) for heat shrinking a film (3) wrapping an object (2), the heat shrink oven comprising:
- a housing (9) having a heat treatment chamber (64) for containing steam and for arranging a steam flow pattern,
- a transport device (11) for supporting and moving the object through the heat treatment chamber,
- at least one steam supply (12) for supplying steam to the heat treatment chamber (64),
- at least a primary steam unit comprising a first and a second steam outlet device (13a,13a') comprising one or more outlets (27) for steam, the steam outlet devices connected to the steam supply, the first steam outlet device (13a) disposed in the heat treatment chamber along a first side of the transport device (11) and the second steam outlet device (13a') disposed along a second side of the transport device, opposite the first side, the outlets directed towards the moving object,
wherein the heat shrink oven further comprises,
- a secondary steam system, arranged in the heat treatment chamber (64), for generating a downward directed steam flow in an area extending between the steam outlet devices, the downward directed steam flow having a lower temperature than the steam supplied from the steam outlet devices, wherein the secondary steam system is arranged to be supplied with steam internal in the heat treatment chamber (64).

2. Heat shrink oven according to claim 1, wherein the secondary steam system is arranged to supply secondary steam having a temperature of at least 4 degrees Celsius lower than the primary steam flow entering the heat treatment chamber (64) through the outlets (27) and/or wherein the secondary steam system is arranged to supply secondary steam having a temperature of less than 88 degrees Celsius.

3. Heat shrink oven according to any of the preceding claims, wherein the outlets (27) are positioned to supply the primary steam directed generally horizontal, and preferably directed at a bottom end of the moving object supported by the transport device (11).

4. Heat shrink oven according to any of the preceding claims, wherein the secondary steam system for generating the downwardly directed steam flow is also arranged to generate a generally upward directed steam flow in the heat treatment chamber (64) in an area outside the area between the opposite fluid outlet devices.

5. Heat shrink oven according to any of the preceding claims, wherein the secondary steam system for generating the downwardly directed steam flow comprises a guide allowing the outward guiding of the steam flow.

6. Heat shrink oven according to claim 5, wherein the heat shrink oven comprises a frame received in the heat treatment chamber for mounting the steam outlet devices and wherein the secondary steam system for generating the steam flow surrounds the steam outlet devices mounted to the frame.

7. Heat shrink oven according to any of the preceding claims, wherein the secondary steam system for generating the downwardly directed steam flow further comprises steam flow device (22,24)arranged to generate the downward flow of steam, wherein the steam flow device, such as a vent, preferably is mounted in the heat treatment chamber (64).

8. Heat shrink oven according to any of the preceding claims, wherein multiple sets of steam outlet devices are provided along the transport device and wherein the secondary steam system is positioned at the most upstream steam outlet devices or upstream from the most upstream steam outlet devices, and/or wherein steam outlet device comprises at least three or more outlets (27) in a straight line.

9. Heat shrink oven according to any of the preceding claims, wherein the transport device is at least partially received in the heat treatment chamber (64) and the object is a generally cylindrical container for a beverage and the film is a cylindrical envelope.

10. Method of shrinking a heat shrinkable film (3) wrapping an object (2), the method comprising shrinking the heat shrinkable film in a heat treatment chamber (64) of a heat shrink oven (1), wherein the heat treatment chamber is a closed housing for containing steam:
- transporting the upright standing object wrapped with heat shrinkable film through the heat treatment chamber (64);
- applying primary steam onto a side of the film (3); and
- directing secondary steam of lower temperature than the primary steam in a downward direction onto the object (2).

11. Method according to claim 10, wherein the secondary steam is directed onto the object (2) upstream from the application of primary steam.

12. Method according to any of the claims 10-11, wherein the secondary steam is directed onto the object (2) during application of the primary steam.

13. Method according to any of the claims 10-12, wherein directing the steam in the downward direction comprises generating a closed flow pattern for steam in the heat treatment chamber (64), in the downward direction onto the object (2), in an outwards direction, away from the object, followed by an upward direction and inward direction and/or wherein applying the steam for heat shrinking a first part of the film comprises applying the steam to a bottom part of the object (2).

14. Method according to any of the claims 10-13, wherein the method comprises multiple stages of applying steam to the object being transported through the heat treatment chamber (64).

15. Method according to any of the claims 10-14, wherein steam is applied from two opposite sides onto the object (2) carried through the heat treatment chamber.

## Patentansprüche

1. Wärmeschrumpfofen (1) zum Wärmeschrumpfen einer Folie (3), die ein Objekt (2) umwickelt, wobei der Wärmeschrumpfofen aufweist:
- ein Gehäuse (9) mit einer Wärmebehandlungskammer (64) zum Aufnehmen von Dampf und zum Einrichten eines Dampfströmungsmusters,
- eine Transportvorrichtung (11) zum Halten und Bewegen des Objekts durch die Wärmebehandlungskammer,
- wenigstens eine Dampfzuführung (12) zum Zuführen von Dampf an die Wärmebehandlungskammer (64),
- wenigstens eine primäre Dampfeinheit, die eine erste und eine zweite Dampfauslassvorrichtung (13a, 13a') aufweist, die einen oder mehrere Auslässe (27) für Dampf aufwiest, wobei die Dampfauslassvorrichtungen mit der Dampfzuführung verbunden sind, wobei die erste Dampfauslassvorrichtung (13a) entlang einer ersten Seite der Transportvorrichtung (11) in der Wärmebehandlungskammer angeordnet ist und die zweite Dampfauslassvorrichtung (13a') entlang einer zweiten Seite der Transportvorrichtung entgegengesetzt zu der ersten Seite angeordnet ist, wobei die Auslässe in Richtung des sich bewegenden Objekts gerichtet sind,
wobei der Wärmeschrumpfofen ferner aufweist:
- ein sekundäres Dampfsystem, das in der Wärmebehandlungskammer (64) angeordnet ist, um in einem Bereich, der sich zwischen den Dampfauslassvorrichtungen erstreckt, eine nach unten gerichtete Dampfströmung zu erzeugen, wobei die nach unten gerichtete Dampfströmung eine niedrigere Temperatur als der von den Dampfauslassvorrichtungen gelieferte Dampf hat, wobei das sekundäre Dampfsystem eingerichtet ist, um mit Dampf innerhalb der Wärmebehandlungskammer (64) versorgt zu werden.

2. Wärmeschrumpfofen nach Anspruch 1, wobei das sekundäre Dampfsystem eingerichtet ist, um sekundären Dampf mit einer Temperatur von wenigstens 4 Grad Celsius niedriger als die primäre Dampfströmung, welche durch die Auslässe (27) in die Wärmebehandlungskammer (64) eintritt, zuzuführen, und/oder wobei das sekundäre Dampfsystem eingerichtet ist, um sekundären Dampf mit einer Temperatur von weniger als 88 Grad Celsius zuzuführen.

3. Wärmeschrumpfofen nach einem der vorhergehenden Ansprüche, wobei die Auslässe (27) positioniert sind, um die primäre Dampfströmung, die im Allgemeinen horizontal ausgerichtet ist, zuzuführen, und vorzugsweise auf ein unteres Ende des sich bewegenden Objekts, das von der Transportvorrichtung (11) gehalten wird, gerichtet ist.

4. Wärmeschrumpfofen nach einem der vorhergehenden Ansprüche, wobei das sekundäre Dampfsystem zum Erzeugen der nach unten gerichteten Dampfströmung auch eingerichtet ist, um in einem Bereich außerhalb des Bereichs zwischen den entgegengesetzten Fluidauslassvorrichtungen eine im Allgemeinen nach oben gerichtete Dampfströmung in der Wärmebehandlungskammer (64) zu erzeugen.

5. Wärmeschrumpfofen nach einem der vorhergehenden Ansprüche, wobei das sekundäre Dampfsystem zum Erzeugen der nach unten gerichteten Dampfströmung eine Führung aufweist, die das Ausrichten der Dampfströmung nach außen zulässt.

6. Wärmeschrumpfofen nach Anspruch 5, wobei der Wärmeschrumpfofen einen Rahmen aufweist, der in der Wärmebehandlungskammer aufgenommen ist, um die Dampfauslassvorrichtungen zu montieren, und wobei das sekundäre Dampfsystem zum Erzeugen der Dampfströmung die an dem Rahmen montierten Dampfauslassvorrichtungen umgibt.

7. Wärmeschrumpfofen nach einem der vorhergehenden Ansprüche, wobei das sekundäre System zum Erzeugen der nach unten gerichteten Dampfströmung ferner eine Dampfströmungsvorrichtung (22, 24) aufweist, die eingerichtet ist, um die Abwärtsströmung von Dampf zu erzeugen, wobei die Dampfströmungsvorrichtung, wie etwa eine Lüftungsöffnung, vorzugsweise in der Wärmebehandlungskammer (64) montiert ist.

8. Wärmeschrumpfofen nach einem der vorhergehenden Ansprüche, wobei mehrere Sätze von Dampfauslassvorrichtungen entlang der Transportvorrichtung bereitgestellt sind, und wobei das sekundäre Dampfsystem an den strömungsaufwärtigsten Dampfauslassvorrichtungen oder strömungsaufwärtig von den strömungsaufwärtigsten Dampfauslassvorrichtungen bereitgestellt ist, und/oder wobei die Dampfauslassvorrichtung wenigstens drei oder mehr Auslässe (27) in einer geraden Linie aufweist.

9. Wärmeschrumpfofen nach einem der vorhergehenden Ansprüche, wobei die Transportvorrichtung wenigstens teilweise in der Wärmebehandlungskammer (64) aufgenommen ist und das Objekt ein im Allgemeinen zylindrischer Behälter für ein Getränk ist und die Folie eine zylindrische Hülle ist.

10. Verfahren zum Wärmeschrumpfen einer wärmeschrumpfbaren Folie (3), die ein Objekt (2) umwickelt, wobei das Verfahren das Schrumpfen der wärmeschrumpfbaren Folie in einer Wärmebehandlungskammer (64) eines Wärmeschrumpfofens (1) aufweist, wobei die Wärmebehandlungskammer ein geschlossenes Gehäuse zum Aufnehmen von Dampf ist:
- Transportieren des aufrecht stehenden Objekts, das mit wärmeschrumpfbarer Folie umwickelt ist, durch Wärmebehandlungskammer (64);
- Anwenden von Primärdampf auf eine Seite der Folie (3); und
- Richten von Sekundärdampf mit niedrigerer Temperatur als der Primärdampf in einer Abwärtsrichtung auf das Objekt (2).

11. Verfahren nach Anspruch 10, wobei der Sekundärdampf strömungsaufwärtig von der Anwendung des Primärdampfs auf das Objekt (2) gerichtet wird.

12. Verfahren nach einem der Ansprüche 10 - 11, wobei der Sekundärdampf während der Anwendung des Primärdampfs auf das Objekt (2) gerichtet wird.

13. Verfahren nach einem der Ansprüche 10 - 12, wobei das Ausrichten des Dampfs in die Abwärtsrichtung das Erzeugen eines geschlossenen Strömungsmusters für Dampf in der Wärmebehandlungskammer (64) in die Abwärtsrichtung auf das Objekt (2), in einer Auswärtsrichtung weg von dem Objekt, gefolgt von einer Aufwärtsausrichtung und Einwärtsausrichtung aufweist, und/oder wobei das Anwenden des Dampfs zum Wärmeschrumpfen eines ersten Teils der Folie das Anwenden des Dampfs auf einen unteren Teil des Objekts (2) aufweist.

14. Verfahren nach einem der Ansprüche 10 - 13, wobei das Verfahren mehrere Stufen der Anwendung von Dampf auf das Objekt aufweist, das durch die Wärmebehandlungskammer (64) transportiert wird.

15. Verfahren nach einem der Ansprüche 10 - 14, wobei Dampf von zwei entgegengesetzten Seiten auf das Objekt (2), das durch die Wärmebehandlungskammer befördert wird, angewendet wird.

## Revendications

1. Four de thermorétraction (1) pour thermorétracter un film (3) enveloppant un objet (2), le four de thermorétraction comprenant :
- un logement (9) ayant une chambre de traitement thermique (64) pour contenir de la vapeur et pour agencer un schéma d'écoulement de vapeur,
- un dispositif de transport (11) pour supporter et déplacer l'objet à travers la chambre de traitement thermique,
- au moins une alimentation en vapeur (12) pour alimenter la chambre de traitement thermique (64) en vapeur,
- au moins une unité de vapeur primaire comprenant un premier et un second dispositif de sortie de vapeur (13a, 13a') comprenant un ou plusieurs orifices de sortie (27) pour la vapeur, les dispositifs de sortie de vapeur étant raccordés à l'alimentation en vapeur, le premier dispositif de sortie de vapeur (13a) étant disposé dans la chambre de traitement thermique le long d'un premier côté du dispositif de transport (11) et le second dispositif de sortie de vapeur (13a') étant disposé le long d'un second côté du dispositif de transport, opposé au premier côté, les orifices de sortie étant dirigés vers l'objet en déplacement,
dans lequel le four de thermorétraction comprend en outre,
- un système de vapeur secondaire, agencé dans la chambre de traitement thermique (64), pour générer un écoulement de vapeur dirigé vers le bas dans une zone s'étendant entre les dispositifs de sortie de vapeur, l'écoulement de vapeur dirigé vers le bas ayant une température inférieure à la vapeur fournie depuis les dispositifs de sortie de vapeur, dans lequel le système de vapeur secondaire est agencé pour être alimenté en vapeur interne dans la chambre de traitement thermique (64).

2. Four de thermorétraction selon la revendication 1, dans lequel le système de vapeur secondaire est agencé pour fournir une vapeur secondaire ayant une température inférieure d'au moins 4 degrés Celsius à l'écoulement de vapeur primaire entrant dans la chambre de traitement thermique (64) à travers les orifices de sortie (27) et/ou dans lequel le système de vapeur secondaire est agencé pour fournir une vapeur secondaire ayant une température inférieure à 88 degrés Celsius.

3. Four de thermorétraction selon l'une quelconque des revendications précédentes, dans lequel les orifices de sortie (27) sont positionnés pour fournir la vapeur primaire dirigée généralement à l'horizontale, et dirigée de préférence au niveau d'une extrémité basse de l'objet en mouvement supporté par le dispositif de transport (11).

4. Four de thermorétraction selon l'une quelconque des revendications précédentes, dans lequel le système de vapeur secondaire pour générer l'écoulement de vapeur dirigé vers le bas est également agencé pour générer un écoulement de vapeur dirigé généralement vers le haut dans la chambre de traitement thermique (64) dans une zone à l'extérieur de la zone entre les dispositifs de sortie de fluide opposés.

5. Four de thermorétraction selon l'une quelconque des revendications précédentes, dans lequel le système de vapeur secondaire pour générer l'écoulement de vapeur dirigé vers le bas comprend un guide permettant le guidage vers l'extérieur de l'écoulement de vapeur.

6. Four de thermorétraction selon la revendication 5, dans lequel le four de thermorétraction comprend un cadre reçu dans la chambre de traitement thermique pour monter les dispositifs de sortie de vapeur et dans lequel le système de vapeur secondaire pour générer l'écoulement de vapeur entoure les dispositifs de sortie de vapeur montés sur le cadre.

7. Four de thermorétraction selon l'une quelconque des revendications précédentes, dans lequel le système de vapeur secondaire pour générer l'écoulement de vapeur dirigé vers le bas comprend en outre un dispositif d'écoulement de vapeur (22, 24) agencé pour générer l'écoulement de vapeur vers le bas, dans lequel le dispositif d'écoulement de vapeur, tel qu'un évent, est de préférence monté dans la chambre de traitement thermique (64).

8. Four de thermorétraction selon l'une quelconque des revendications précédentes, dans lequel de multiples ensembles de dispositifs de sortie de vapeur sont fournis le long du dispositif de transport et dans lequel le système de vapeur secondaire est positionné au niveau des dispositifs de sortie de vapeur les plus en amont ou en amont des dispositifs de sortie de vapeur les plus en amont, et/ou dans lequel le dispositif de sortie de vapeur comprend au moins trois orifices de sortie (27) ou plus dans une ligne droite.

9. Four de thermorétraction selon l'une quelconque des revendications précédentes, dans lequel le dispositif de transport est reçu au moins partiellement dans la chambre de traitement thermique (64) et l'objet est un contenant généralement cylindrique pour une boisson et le film est une enveloppe cylindrique.

10. Procédé de rétraction d'un film thermorétractable (3) enveloppant un objet (2), le procédé comprenant la rétraction du film thermorétractable dans une chambre de traitement thermique (64) d'un four de thermorétraction (1), dans lequel la chambre de traitement thermique est un logement fermé pour contenir de la vapeur :
- le transport de l'objet se tenant relevé enveloppé d'un film thermorétractable à travers la chambre de traitement thermique (64) ;
- l'application d'une vapeur primaire sur un côté du film (3) ; et
- le fait de diriger une vapeur secondaire de température inférieure à la vapeur primaire dans une direction vers le bas sur l'objet (2).

11. Procédé selon la revendication 10, dans lequel la vapeur secondaire est dirigée sur l'objet (2) en amont de l'application de vapeur primaire.

12. Procédé selon l'une quelconque des revendications 10 et 11, dans lequel la vapeur secondaire est dirigée sur l'objet (2) pendant l'application de la vapeur primaire.

13. Procédé selon l'une quelconque des revendications 10 à 12, dans lequel le fait de diriger la vapeur dans la direction vers le bas comprend la génération d'un schéma d'écoulement fermé pour la vapeur dans la chambre de traitement thermique (64), dans la direction vers le bas sur l'objet (2), dans une direction vers l'extérieur, en éloignement de l'objet, suivi d'une direction vers le haut et d'une direction vers l'intérieur et/ou dans lequel l'application de la vapeur pour thermorétracter une première partie du film comprend l'application de la vapeur sur une partie basse de l'objet (2).

14. Procédé selon l'une quelconque des revendications 10 à 13, dans lequel le procédé comprend de multiples phases d'application de vapeur à l'objet qui est transporté à travers la chambre de traitement thermique (64).

15. Procédé selon l'une quelconque des revendications 10 à 14, dans lequel la vapeur est appliquée depuis deux côtés opposés sur l'objet (2) porté à travers la chambre de traitement thermique.
